# EUROPEAN PATENT APPLICATION

(11) **EP 4 148 634 A1**
(43) Date of publication of application: **15.03.2023**
(21) Application number: 22195503.2
(22) Date of filing: 14.09.2022
(51) Int. Cl.: G06Q 10/00, G06Q 30/01, G06Q 10/20

(54) **ELECTRONIC PLATFORM AND CORRESPONDING INTERFACING METHOD**

(30) Priority: 14.09.2021 IT 202100023690
(71) Applicant: Way Point S.r.l., 37138 Verona (IT)
(72) Inventor: Baesso, Philippe, 31033 Castelfranco Veneto (IT)
(74) Representative: Petraz, Davide Luigi

(57) **Abstract**

The invention concerns an electronic platform (10) for tracking and managing objects (100) comprising one or more identifying elements (11) installed in said object (100) and a processing system (12), the electronic platform (10) being configured to comprise and/or be operatively associated with user devices (60). The invention also concerns an interfacing method for tracking and managing objects (100) by means of an electronic platform (10).

## Description

### FIELD OF THE INVENTION

The present invention concerns an electronic platform for tracking and managing at least one object subjected to maintenance and/or which has components that can be replaced, for example following damage, breakage, fault, updating with more recent and/or more efficient components and/or suchlike.

Advantageously but not exclusively, the invention can be applied to the sector of lighting apparatuses, but also home automation, or in general in the sector of objects for sports use, wearable objects, items of clothing or suchlike.

The present invention also concerns an interfacing method for tracking and managing at least one object by means of said electronic platform.

### BACKGROUND OF THE INVENTION

It is known that, in domestic and/or work environments, it is usual to completely replace objects in the event of malfunction or fault, since it is often cheaper to replace them than to repair them. For example, integrated LED lamps are usually considered a single object which, in the event of a fault, is entirely removed.

It is known that, to reduce the environmental impact, objects should be designed according to a concept of modularity that allows only the components that are actually not working to be disassembled and replaced. Moreover, the replacement of obsolete components can allow the life of the object to be extended and the environmental impact to be reduced.

When these objects are designed so that their components can be replaced, it is often extremely difficult, if not impossible, to find information to identify said components, such as for example their brand or model, or to find the components themselves on the market, or their technical characteristics.

Furthermore, the repair, replacement or maintenance of the objects can be complex, requiring the use of manuals or technical assistance.

Document WO 2016/138194 A1 describes a system for tracking documents or objects, comprising devices for communicating and transferring information relating to the tracking.

Document US 2018/131765 A1 describes a platform for organizing the information of large sets of resources, such as the resources used in the field of the Internet of Things.

The publication Adiono Trio and others: "Wirelessly Control for RGB Lamp End-device: Design and Implementation", TENCON 2018 - 2018 IEEE REGION 10 CONFERENCE, IEEE, 28 October 2018, pages 2066-2070, XP033522854, DOI: 10.1109/TENCON. 2018.8650504 describes a wireless control device for RGB lamps.

There is therefore a need to perfect an electronic platform that can overcome at least one of the disadvantages of the state of the art.

To do this, it is necessary to create an electronic platform able to detect data and information relating to at least one object or its components, and to communicate them to a user.

One purpose of the present invention is to provide an electronic platform, and to perfect a corresponding interfacing method, for tracking and managing at least one object or its components.

Another purpose is to provide an electronic platform able to support a user in the operations to control at least one object or its components, without resorting to other devices.

Another purpose of the present invention is to provide an electronic platform able to support a user in operations to repair, replace or maintain the objects.

Another purpose is to provide an electronic platform that is simple to use, even for those who do not have particular technical knowledge.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

By way of premise, in this patent text, including the claims, the term "object" is defined as at least one finished product ready for use, as well as all of its components, which can in turn be finished products or the sum of other elements that constitute the product and fall within the term "object". The present invention also provides the possibility that the platform operates, not just simultaneously, on several objects.

In accordance with the above purposes and to resolve the technical problem disclosed above in a new and original way compared to the state of the prior art, an electronic platform has been defined for tracking and managing at least one object comprising one or more identifying elements installed in the at least one object and a processing system configured at least to store and manage one or more databases of information relating to the object and one or more algorithms for managing the identifying data of the object and said information.

The one or more identifying elements are configured to be queried by a user device, by means of a reader, and to supply the identifying data to the user device.

The user device is configured to send the identifying data to the processing system and to receive the information in response.

Doing so achieves the advantage that the user can automatically obtain the information by simply interfacing the user device with the object.

The information comprises a list of components which is valid at the time of assembly of the at least one object. Advantageously, the user can therefore easily identify and find the components to be replaced and the information necessary for the replacement.

The electronic platform comprises one or more electronic control devices installed in the at least one object, which can be interfaced with one or more communication modules and can be controlled by means of the user device and/or voice commands. The user can therefore both track the object as well as control its functionality by means of a single platform. In addition, by interacting with the processing system, the electronic control devices can automatically and autonomously communicate any malfunctions or faults thereto. The electronic platform can therefore allow an automatic and more effective and faster management of faults and malfunctions.

In accordance with another aspect of the present invention, the identifying element can be configured to store one or more univocal internet addresses identifying one or more of the databases and/or one or more websites containing the information.

This achieves the advantage that the user can be automatically redirected to the information, which is possibly updated by the manufacturer, by the retailer or suchlike.

According to some embodiments, the electronic control devices can be controlled by means of an application installed on the user device and/or by means of voice commands. The fact that the user can command the object by means of a single platform, even remotely and/or without physically interacting with buttons or suchlike, is an advantage.

### DESCRIPTION OF THE DRAWINGS

These and other aspects, characteristics and advantages of the present invention will become apparent from the following description of some embodiments, given as a non-restrictive example with reference to the attached drawings wherein:

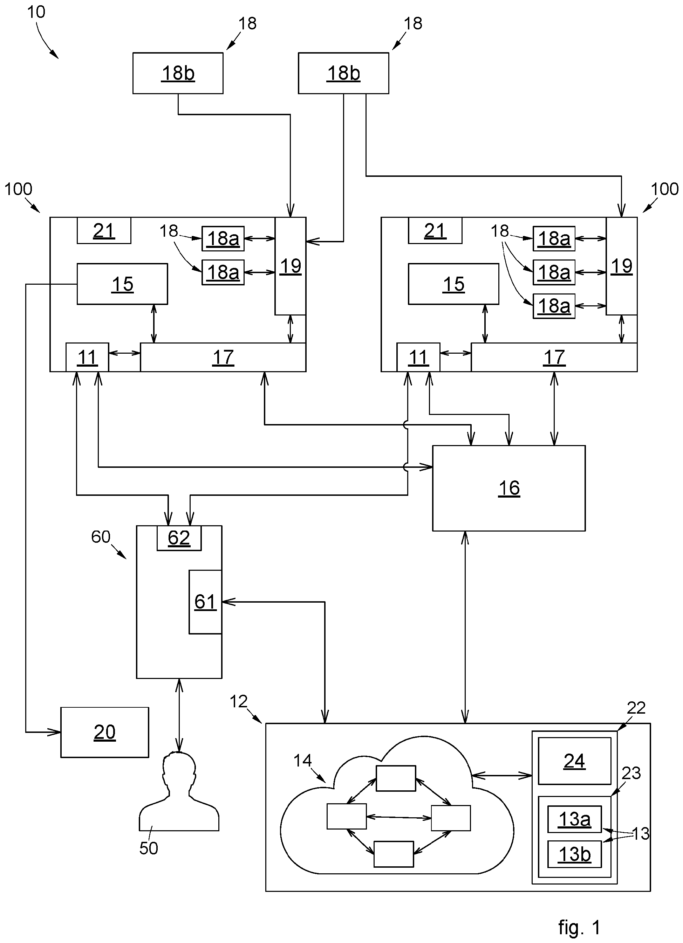

- fig. 1 is a schematic representation of an electronic platform according to the present invention;
- figs. from 2 to 7 are views of the interface of an application of the electronic platform of fig. 1.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

With reference to fig. 1, an electronic platform 10 for tracking and managing at least one object 100, according to the present invention, comprises one or more identifying elements 11 installed in an object 100 and a processing system 12 configured at least to store and manage one or more databases 13 of information relating to the object 100 and one or more algorithms for managing identifying data relating to the object 100 and said information.

By the term "tracking" of an object 100 we mean retrieving and making available information relating to the object 100.

By the term "managing" we mean managing at least operations to repair, replace or perform maintenance on the objects 100.

The objects 100 can be any finished product whatsoever, or a component thereof, which can be single or in turn made up of several components, subjected to maintenance and/or which has components that can be replaced, for example following damage, fault, update with more recent and/or efficient components and/or suchlike.

The objects 100 can be home automation objects, such as alarm systems, motorized blackout systems, heating and/or cooling systems and/or suchlike. Even more preferably, the objects 100 can be lighting apparatuses such as lamps, and the components that can be replaced can be light bulbs, sheets of glass, starters, reflecting elements, electronic command components or suchlike. The objects 100 can also be objects for sports use, wearable objects, items of clothing and/or similar and comparable objects.

The information can be information relating to at least one component that constitutes the object 100, such as a list of product codes, as well as the brand or model, the lot and the production/assembly date, the state of obsolescence, the operating state, references to previous maintenance and/or replacement operations, user manuals and/or suchlike. The information can also comprise the list of resellers or links to reseller sites, or links for automatic re-ordering, information relating to the availability of more recent and/or more efficient components, or their upgrades, or information relating to additional objects that can be integrated/interfaced with the object 100 or the availability of assistance campaigns and/or suchlike.

The present invention also provides the possibility that the platform operates, not only simultaneously, on several objects 100.

The one or more databases 13 can be management databases 13a, databases of data relating to points of sale/service centers, databases of Stock Keeping Unit (SKU) type data, databases of Product Information Management (PIM) type data 13b and/or suchlike.

For example, the PIM type data can comprise the registry of the attributes of a SKU; a management database 13a can contain procedures for the production of a family of objects 100, the association between a batch of objects 100 and the corresponding production/assembly period, information relating to component suppliers or suchlike.

The one or more databases 13 and one or more management algorithms can be configured to cooperate in order to associate the identifying data and the information with an object 100.

The one or more identifying elements 11 can be configured to contain the identifying data of an object 100.

The identifying data can be one or more object codes, for example an object code comprising one or more univocal internet addresses (URL - Uniform Resource Locator) identifying one or more of the databases 13 and/or one or more websites containing said information and/or the SKU and/or PIM type information as above.

The one or more identifying elements 11 can be alphanumeric codes, such as bar codes, QR codes or suchlike, NFC tags, RFID (Radio-Frequency Identification) tags, reading and writing NFC/RFID dual-tags, of the passive and/or active type, or suchlike. Preferably, the identifying elements 11 can be reading and writing NCF tags or NFC/RFID dual-tags. Even more preferably, the identifying elements 11 can be reading NCF tags or NFC/RFID dual-tags.

The identifying elements 11 can be installed in the production phase of the object 100 or later, for example in an object 100 of a different manufacturer.

The processing system 12 can be a dedicated cloud architecture 14 which can comprise a multiplicity of processing systems, such as personal computers, servers and/or suchlike. The architecture 14 can be in communication with, or comprise, one or more servers, personal computers and/or local or remote management units 22, for example located at a service center, a point of sale, the manufacturer of the objects 100.

The servers, personal computers and/or management units 22 or suchlike can comprise one or more storage units 23 and one or more processing units 24.

Such units 23 can be one or more memories among those commercially available, such as a random access memory (RAM), a read only memory (ROM), a floppy disc, hard disk, mass memory, or any other form of digital storage whatsoever, local or remote. Such units 23 can be configured to store databases 13 and/or one or more algorithms for managing the identifying data and information.

The processing units 24 can be any form of processor whatsoever, able to execute the management algorithms as above.

The management algorithms, or management systems, can be algorithms based on API (Application Programming Interface), in particular on REST API (REpresentational State Transfer), or which cooperate with API. For example, the data management algorithm can be an SAP, ORACLE Netsuite, Microsoft Dynamics AX Business Management System, or any business management system operating through a database.

The system 12 can be configured to execute algorithms based on Artificial Intelligence (AI) techniques, such as neural networks and/or fuzzy logic or suchlike. Advantageously, the AI algorithms can be configured to support a user 50 in tracking and/or managing the object 100.

The electronic platform 10 is configured to comprise and/or be operatively associated with user devices 60 which can be electronic devices such as notebooks, tablets, cell phones, dedicated electronic devices or suchlike, preferably smartphones.

Such devices 60 can be provided with an element 61 for communicating with an internet network, of the wired or wireless type.

The term "user" can comprise users 50 of the objects 100 and operators. By the term "operators" we mean authorized personnel working in the production of the objects 100, a point of sale, a service center or suchlike.

When associated with a user 50, the devices 60 can be used to retrieve information such as brand or model, component codes, user manuals, information to contact an operator and/or suchlike. When associated with an employee of a point of sale or service center, the devices 60 can be used, as well as to retrieve the information described above, also to access additional information comprised in the database 13 of the SKU type or suchlike. When associated with a production worker, the devices 60 can be used, as well as to access information, also for interfacing for operations of association, or pairing, of the object 100 with one or more identifying elements 11.

The devices 60 can be associated with one or more objects 100. For example, for a same user 50, a same device 60 can be associated with the home automation objects 100 present in the user's home 50 or with objects 100 present in his/her home and workplace, or suchlike.

The electronic platform 10 can comprise an application that can be installed on the devices 60 and configured to send the identifying data to the processing system 12 and to receive such information in response.

The application can be configured for Android or IOs operating systems and suchlike.

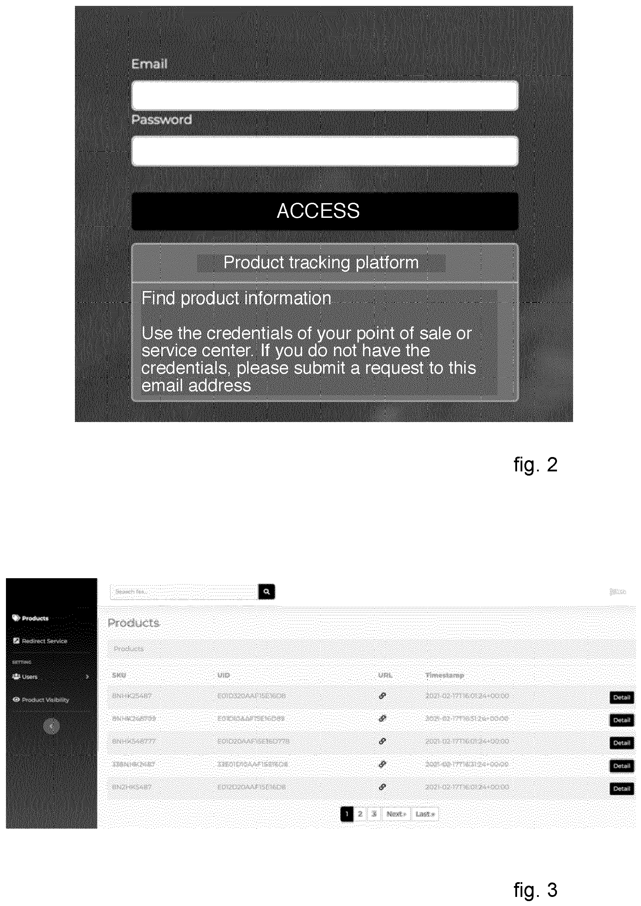

The application can comprise an access screen (fig. 2), in which access is granted by means of identifying data, such as login/password, biometric data or suchlike.

The application can be configured to distinguish between access of one or more application administrators, or users. Among users, the application can be configured to distinguish between access of a user 50, a production employee, an employee of a point of sale, an employee of a service center or suchlike.

The application can be configured to allow access to the one or more management algorithms as above.

For example, the application can comprise one or more of the following user interface screens and the associated functionalities:
- login and registration;
- managing one or more objects 100;
- interacting with the one or more objects 100, comprising functionalities for switching on, switching off, programming, adjusting and/or suchlike;
- receiving notifications and reading of notifications archive;
- list of contacts and information on the manufacturer of the object 100.

The management algorithms can comprise a dashboard to which the administrator and users can be redirected through the application.

For example, the dashboard can comprise a screen of associated objects 100 (paired products), as shown in fig. 3, and an administrator functionality screen. The screen of associated objects 100 can report a list of coded objects 100 containing one or more of the following items of information, or suchlike:
- the SKU, coming from the PIM/Pairing;
- the identifier of the user who performed the pairing;
- the internet address, or link, for redirecting to a database 13 or a site containing information relating to the object 100;
- the time when the pairing was made.

The dashboard can comprise a detail sub-screen, which can be reached from the associated objects 100 screen.

From the administrator functionality screen it can be possible for the administrator to add, modify and view the list of users present in a database 13 and their characteristics, such as the type of user. It can also allow to display, for each user, a "Status" attribute which updates whenever the invitation for authorization to access the dashboard is sent or accepted by the user.

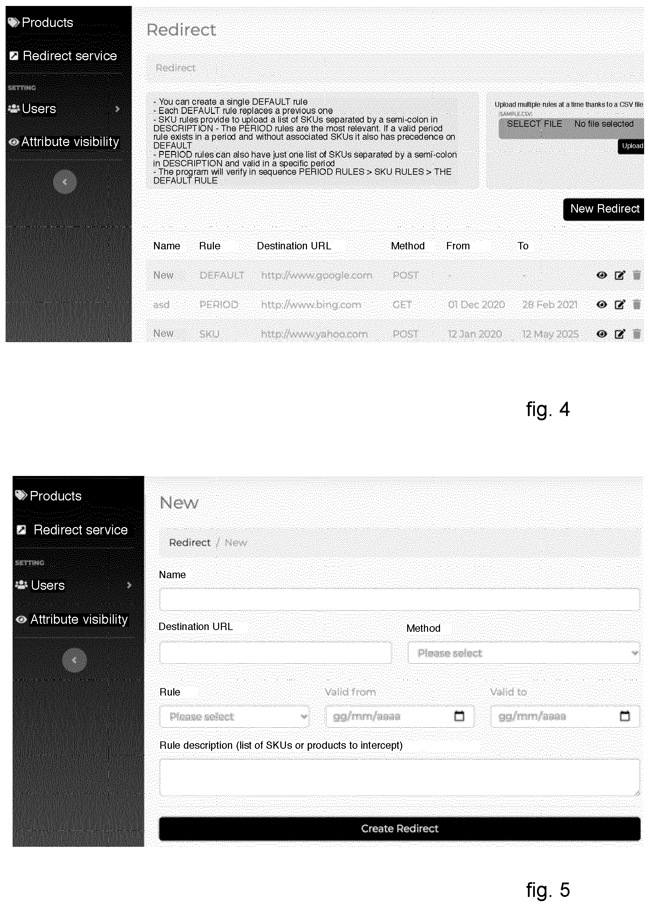

The administrator functionality screen can comprise a redirect sub-screen, as shown in fig. 4. The redirect sub-screen can contain one or more Redirect addresses, or URLs, to forward and redirect users who visit a specific URL to a different address from the one indicated originally. From the redirect sub-screen it is possible to add and see the detail of each Redirect URL. For example, the "Rule" column shows the rule associated with each URL.

The redirect sub-screen can comprise, in a second level, a sub-screen for creating a redirect, as shown in fig. 5. For example, a Redirect URL can be created from the redirect creation sub-screen. The URL to which the application has to redirect the user can be inserted in the "Destination", a list correlated to the selected rule can be inserted in the "Rule Description" and, if necessary, it is possible to select a time interval in relation to any promotional campaigns provided for the object 100.

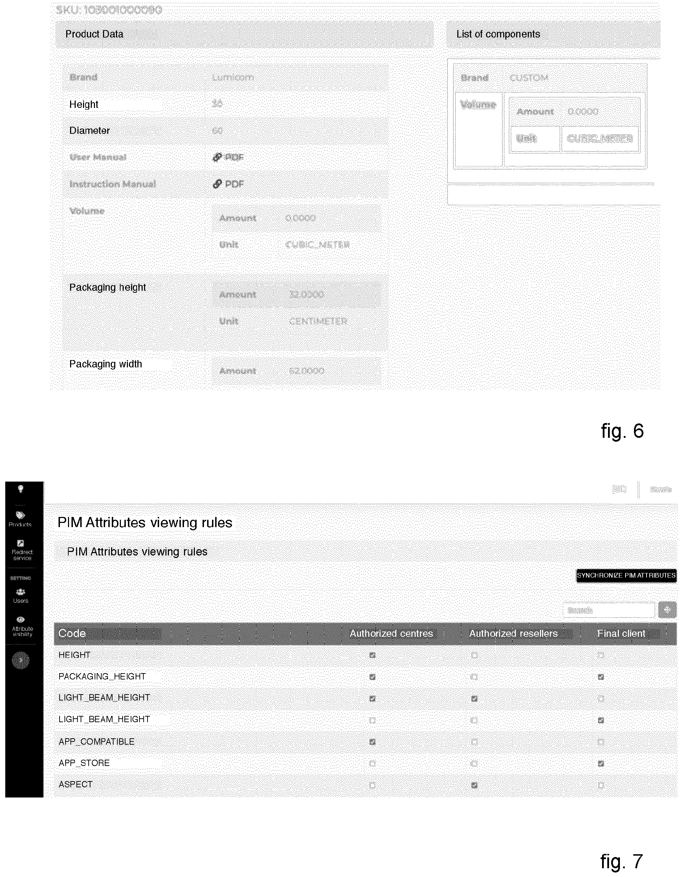

As an additional example, if the user is an employee of a point of sale/service center, the application can be configured to allow access to a dashboard screen to search for SKUs. For example, and as shown in fig. 6, from the SKU search screen an employee of a point of sale /service center can search for a SKU, then displaying the attributes of the PIM that he/she is authorized to see.

In particular, the administrator functionality screen can comprise an SKU visibility sub-screen, as shown in fig. 7, by means of which to update the visibility of the attributes of the PIM of the objects 100 for an employee of a point of sale/service center.

As an additional example, the application can be configured to allow a user 50 access to a screen comprising an internet address for redirection to a site containing information about the object 100.

As an incentive for the registration of a user 50, the application can be configured to make commercial offers, such as the possibility of extending the warranty on the object 100.

The one or more identifying elements 11 are configured to be queried by a user device 60 in which an application is installed able to interface with a reader 62 - which can be a webcam, a smartphone camera, a custom reader or suchlike - and command the querying of the identifying elements 11.

The application installed on the device 60 is configured to send the identifying data to the processing system 12. It is also configured to receive the information from the processing system 12 in response.

The management algorithms present in the processing system 12 can be configured to manage such information. Advantageously, the information can be used by a user for the maintenance or replacement of the components of the object 100. In particular, it can be used to order replacement parts, to request maintenance interventions, to retrieve maintenance manuals or suchlike.

By way of example, in the event that the component of a lamp breaks, a user 50 can query the one or more identifying elements 11 by means of the device 60. The application installed on the device 60 can establish a connection with an internet address comprised in the identifying data of the object 100. The connection established can supply the application installed on the device 60 with a list of components of the object 100, identified for example by a component code. In this way, the user 50 can quickly identify the component to be replaced and order it.

As an additional example, the user 50 can indicate, by means of the application, a particular component to be replaced, for example an LED, a sheet of glass or suchlike, and in addition to the component code he/she can also obtain a list of resellers who supply it, or send the purchase order directly.

As an additional example, the internet address can lead the user to a site, or web page, where replacement components are found.

The internet address can lead the user to a web page where he/she can ask questions relating to the operation and/or maintenance of the object 100 and/or the replacement of components or suchlike.

The management algorithms can comprise AI algorithms. The AI algorithms can be trained to autonomously and automatically supply the user with the requested information.

The AI algorithms can be trained on the modes of support used by operators to support users, in order to autonomously and automatically support a user 50 in the use of the object 100. For example, they can be trained through datasets of real user support cases to learn how to automatically and autonomously support a user in the search for technical information, in the step-by-step execution of operations to replace parts, perform maintenance operations or operations to optimize operation, to autonomously answer questions submitted or suchlike.

The AI algorithms can be trained to carry out an automatic diagnosis in cases of malfunction or fault of the object 100, as well as to manage troubleshooting operations, such as the automatic ordering of spare parts, the intervention of an operator or suchlike.

The AI algorithms can be configured to recognize the object 100. For example, they can be configured to recognize two lamps, located in different rooms or different buildings, which are associated with the same user 50. Advantageously, the information relating to the place of installation of the object 100 can be associated with the object 100 through the access of a user device 60 to external geolocation applications.

The electronic platform 10 can comprise one or more electronic control devices 15 that control the object 100, which can be microcontrollers, processors or suchlike and can be able to control the functionality of the object. By way of example, in the event the object 100 is a lighting apparatus, the electronic control devices 15 can be able to control the switching on and off, the intensity of the light, the color and/or suchlike, and/or to execute programs for the maintenance of the object 100.

The term "management" can therefore also comprise the management of operations to control the objects 100.

The electronic control devices 15 can be configured to interact with the processing system 12 in order to automatically and autonomously communicate any malfunctions or faults to the latter.

The electronic platform 10 can therefore allow an automatic and more effective and faster management of faults and malfunctions. For example, the electronic control devices 15 can detect, during the execution of the control operations, an absence of electric voltage, signal or suchlike, and communicate it to the processing system 12. The processing system 12 can use this information, on its own or in synergy with other information, to detect a fault or malfunction. The electronic platform 10 can then automatically communicate to the user 50 the need to replace any parts and the information required for the replacement.

The management algorithms present in the processing system 12 can also be configured to control the object 100 by detecting commands supplied by a user 50, for example manually and/or through the application installed in the user device 60.

The electronic platform 10 can comprise one or more communication devices 16, such as a Zeegbee gateway, a Bluetooth interface, an IR (Infrared) interface or suchlike.

The communication devices 16 can be able to be interfaced with one or more communication modules 17 installed in the object 100.

The communication devices 16 and/or the electronic control devices 15 can be installed in the production phase of the object 100 or later, for example in an object 100 of a different manufacturer.

By means of the one or more communication modules 17, the communication devices 16 can be able to be interfaced with the one or more identifying elements 11 and/or with one or more electronic control devices 15.

The electronic platform 10 can comprise one or more devices 18 for detecting parameters relating to one or more objects 100.

Such detection devices 18 can be any type whatsoever of device for the indirect detection of, or sensor for, the parameters of the object 100 and/or the environment in which the object 100 is positioned. For example, the devices 18 can be sensors for detecting light intensity, electrical energy consumption, temperature, a presence detector, devices that detect the wear of a mechanical component, detectors that detect the usage times of the object 100 or the tension of a rope or tie rod or suchlike.

The devices 18 can be internal 18a and/or external 18b to the object 100. For example, in the case of a lighting apparatus, an internal detection device 18a can be a sensor for detecting the consumption of electrical energy, while an external detection device 18b can be a light intensity detection sensor, a presence detector and/or suchlike.

The devices 18 can interface with the electronic control devices 15 and/or with the communication modules 17 by means of a detection interface device 19 or directly.

The term "management" can therefore also comprise the management of operations to monitoring the objects 100.

The management algorithms present in the processing system 12 can also be configured to monitor the object 100, detecting parameters supplied by the detection devices 18.

The management algorithms comprising AI algorithms can be trained by means of the parameters as above. In this way, the electronic platform 10 can be trained on the use of the object 100 by the user 50.

For example, the AI algorithms can detect the usage times of an object 100 and inform a user 50 when these vary. For example, if a lighting device is switched on during times that do not comply with the usual use, the platform can send a message to the user device 60.

The electronic platform 10 can comprise a voice command detector 20, such as a microphone.

Advantageously, the one or more devices 15 can be able to be controlled by means of voice commands. For example, a user can, by means of voice commands, request information relating to the object 100, activate or deactivate it, manage its functionalities and/or suchlike.

The voice command detector 20 can be integrated in one or more objects 100, in one or more communication modules 17 and/or in one or more user devices 60. In alternative embodiments, it can be an autonomous detector, in communication with one or more objects 100, one or more communication modules 17 and/or one or more user devices 60.

The electronic platform 10 can comprise one or more actuation devices 21 which can be connected to the one or more electronic control devices 15 in order to receive commands relating to the functionalities of the object 100.

For example, the actuation devices 21 can be relays or switches for switching a lighting apparatus on or off, dimmable resistors for adjusting the intensity of the light or the power of a motor and/or suchlike.

The operation of the electronic platform 10 described heretofore, which corresponds to the method according to the present invention, comprises the following steps:
- association (pairing) of one or more identifying elements 11 with a corresponding object 100;
- during use, query, by a user device 60, of one or more of the identifying elements 11;
- response, by the one or more identifying elements 11, to supply the device 60 with identifying data of the object 100;
- sending of the identifying data, by an application installed on the device 60, to a processing system 12;
- response, by the processing system 12, to supply information relating to the object 100 comprising a list of components valid at the time of assembly of the object 100.

The method also comprises controlling the object 100 by means of one or more electronic control devices 15 installed in the object 100, which can be interfaced with one or more communication modules 17 and controlled by means of the user device 60 and/or voice commands.

According to some embodiments, the step in which one or more identifying elements 11 are associated with an object 100 can provide writing identifying data of the object 100 in the identifying elements 11.

According to some embodiments, this association can be performed by means of an application installed on a user device 60 associated with an operator, and by means of management algorithms present in the processing system 12. In the association step, the operator with whom the device 60 is associated can be an operator, preferably a production employee.

The method can provide that the components of an object 100 are identified at least by means of an association date, or pairing date. In particular, the method can provide that the management algorithms detect information contained in a management database 13a and combine them with information contained in a database of PIM type data 13b. The management database 13a can contain an association date relating to an object 100. From the association date and from the SKU of the object 100, recalled through the PIM, it is possible to determine the list of components relating to objects 100 produced in correspondence with that specific association date.

The method can provide that the identifying data of the object 100 are read from an electronic medium, for example a barcode, a QR code or suchlike and then reported on the identifying element 11. It can therefore provide that the identifying data are updated with PIM type data, in particular data that are assumed to be immutable such as for example name, family and suchlike. The data can be read from the electronic medium and then written on the identifying element 11 by means of the user device 60.

The method can provide that the interaction between the management algorithm and the database of PIM type data 13b can also occur:
- when a user views the detail page of a product;
- daily for the functionality of managing the visibility by the employees of a point of sale.

The method can provide to send the information as above to the user 50 of the object 100, possibly to employees of points of sale/service centers. For example, a user 50 can contact an employee of a point of sale/service center to receive support and the operator can interface with the object 100 by means of a user device 60, belonging to the user 50 or to the operator.

The method can provide to update the information as above over time, by storing events that occurred during the life of the object 100, such as the updating of hardware components of a lamp for example, such as the addition or elimination of sensors.

It is clear that modifications and/or additions of parts may be made to the electronic platform 10 and to the method as described heretofore, without departing from the field and scope of the present invention, as defined by the claims.

It is also clear that, although the present invention has been described with reference to some specific examples, a person of skill in the art shall certainly be able to achieve many other equivalent forms of electronic platform 10 and corresponding method, having the characteristics as set forth in the claims and hence all coming within the field of protection defined thereby.

In the following claims, the sole purpose of the references in brackets is to facilitate the reading of the claims and they must not be considered as restrictive factors with regard to the field of protection defined thereby.

## Claims

1. Electronic platform (10) for tracking and managing at least one object (100) comprising one or more identifying elements (11) installed in said at least one object (100) and a processing system (12) configured at least to store and manage one or more databases (13) of information relating to said at least one object (100), **characterized in that** said one or more identifying elements (11) are configured to be queried by a user device (60), by means of a reader (62), and supply said identifying data to said user device (60) which is configured to send said identifying data to said processing system (12) and receive said information, said information comprising a list of components which is valid at the time of assembly of said at least one object (100), **and in that** it comprises one or more electronic control devices (15) installed in said at least one object (100), which can be interfaced with one or more communication modules (17) and can be controlled by means of said user device (60) and/or voice commands.

2. Electronic platform (10) as in claim 1, **characterized in that** said one or more identifying elements (11) are configured to store one or more univocal internet addresses identifying one or more of said databases (13) and/or one or more websites containing said information.

3. Electronic platform (10) as in any claim hereinbefore, **characterized in that** it comprises algorithms based on Artificial Intelligence techniques able to learn from the use of said at least one object (100) and/or to be trained on the modes of support used by operators to support a user (50) in order to autonomously and automatically supply information relating to said at least one object (100) to a user and/or to support a user (50) of said at least one object (100).

4. Electronic platform (10) as in claim 3, **characterized in that** it comprises one or more devices (18) for detecting parameters relating to at least one object (100) **and in that** said algorithms based on Artificial Intelligence techniques are able to be trained by means of said parameters.

5. Electronic platform (10) as in any claim hereinbefore, **characterized in that** said at least one object (100) is a lighting apparatus.

6. Electronic platform (10) as in any claim from 1 to 4, **characterized in that** said at least one object (100) is an object for sports use.

7. Interfacing method for tracking and managing at least one object (100) by means of an electronic platform (10) as in claims from 1 to 6, comprising:
- associating one or more identifying elements (11) with at least one said object (100);
- during use, querying, by means of a user device (60), the one or more identifying elements (11) of said at least one object (100);
- response, by said one or more identifying elements (11), in order to supply to the user device (60) identifying data of said at least one object (100);
- sending said identifying data to a processing system (12);
- receiving information relating to said at least one object (100), said information comprising a list of components which is valid at the time of assembly of said at least one object (100);
- controlling said at least one object (100) by means of one or more electronic control devices (15) installed in said at least one object (100), which can be interfaced with one or more communication modules (17) and can be controlled by means of said user device (60) and/or voice commands.

8. Method as in claim 7, **characterized in that** it provides that components of said at least one object (100) are identified by means of at least one date of association **and in that** algorithms for managing said processing system (12) detect information contained in a management database (13a) and combine it with information contained in a database of PIM type data (13b).
